Europäisches Patentamt

**European Patent Office**

Office européen des brevets

(19)

(11) Veröffentlichungsnummer: **0 020 413**
**B1**

(12) # EUROPÄISCHE PATENTSCHRIFT

(45) Veröffentlichungstag der Patentschrift:
25.11.81

(51) Int. Cl.³: **F 16 B 21/18**

(21) Anmeldenummer: **79901153.1**

(22) Anmeldetag: **11.09.79**

(86) Internationale Anmeldenummer:
**PCT/DE 79/00106**

(87) Internationale Veröffentlichungsnummer:
**WO 80/00603 (03.04.80** Gazette 80/7)

(54) **BOLZENSICHERUNG MIT SELBSTSPERRUNG GEGEN RADIALABZUG.**

(30) Priorität: **11.09.78 DE 2839409**

(43) Veröffentlichungstag der Anmeldung:
**07.01.81 Patentblatt 81/1**

(45) Bekanntmachung des Hinweises auf die Patenterteilung:
**25.11.81 Patentblatt 81/47**

(84) Benannte Vertragsstaaten:
**AT CH DE FR GB LU NL SE**

(56) Entgegenhaltungen:
**CH-A-505 528**
**DE-A-2 329 922**
**DE-A-2 438 719**
**DE-A-2 515 301**
**DE-A-2 553 392**
**DE-U-7 219 217**
**FR-A-1 500 793**
**US-A-2 531 911**
**US-A-3 558 289**

(73) Patentinhaber: **SPRINGFIX BEFESTIGUNGSTECHNIK GMBH, Brühlstrasse 38, D-7335 Salach (DE)**

(72) Erfinder: **AUSPRUNG, Erich, Oberböhringer Strasse 16, D-7340 Geislingen (DE)**

(74) Vertreter: **Bardehle, Heinz, Dipl.-Ing., Herrnstrasse 15 Postfach 260251, D-8000 München 26 (DE)**

Bolzensicherung mit Selbstsperrung gegen Radialabzug

Die Erfindung bezieht sich auf eine Bolzensicherung mit Selbstsperrung gegen Radialabzug, die aus zwei U-förmig zusammengebogenen, beim Einbau voneinander federnd abspreizbaren Blättern besteht, deren erstes im Einbauzustand in eine Umfangsnut des Bolzens radial einschiebbar ist und deren zweites als selbsttätig einschnappende Sperre wirkt, wobei das erste Blatt mit einem sich bis in die Krümmung des U erstreckenden Schlitz versehen ist, der in einer dem Grunddurchmesser der Nut angepaßten Rundung endet.

Eine derartige Bolzensicherung ist aus der DE-A-2 553 392 bekannt. Diese Bolzensicherung dient dazu, einen aus einem Bauteil herausragenden Bolzen gegen axiale Verschiebung in Richtung in das Bauteil hinein zu sichern, wozu außerhalb des Bauteils die Umfangsnut vorgesehen ist, in die die Bolzensicherung mit ihrem inneren Blatt eingeschoben wird. Das äußere Blatt schnappt dann über das aus dem Bauteil herausragende Ende des Bolzens, das zu diesem Zweck freigehalten sein muß.

Der Erfindung liegt die Aufgabe zugrunde, einen Bolzen gegen axiale Verschiebung zu sichern, bei dem seitlich von der Bolzensicherung Bauteile vorgesehen sein können, so daß also ein freies Bolzenende für das Einschnappen des einen Blattes nicht existiert. Dieses Problem wird dadurch gelöst, daß in Richtung zur Krümmung des U die Rundung in eine Verengung des Schlitzes übergeht und auf der entgegengesetzten Seite in einen das erste Blatt auftrennenden Spalt ausläuft, wobei die beiden neben dem Spalt stehenden Enden dieses Blattes in Richtung auf das zweite Blatt abgewinkelt sind und in eine Aussparung dieses Blattes ragen, die die Enden im Einbauzustand seitlich begrenzt, und daß das zweite Blatt ebenfalls mit einem sich bis in die Krümmung des U erstreckenden Schlitz versehen ist, der in einer dem Außendurchmesser des Bolzens angepaßten Rundung endet.

Durch die Anbringung eines Schlitzes in jedem Blatt ergibt sich zunächst die Möglichkeit, die Bolzensicherung auf einen Bolzen aufzuschieben, wobei der Schlitz in dem ersten Blatt in die Nut eingeführt und der Schlitz in dem zweiten Blatt über den Außendurchmesser des Bolzens hinweggeführt wird. Die Verengung im Schlitz des ersten Blattes sorgt dann dafür, daß das erste Blatt beim Eisetzen der Bolzensicherung aufgespreizt wird. Dies wird dadurch ermöglicht, daß das erste Blatt auf der dem Schlitz abgewandten Seite einen Spalt aufweist, so daß sich das erste Blatt aufspreizen kann, bis schließlich die Verengung über den Grunddurchmesser der Nut hinweggerastet ist. Die neben dem Spalt stehenden Enden des ersten Blattes können sich dabei mit ihren Abwinkelungen darum auseinanderspreizen, weil bei diesem Einführungsvorgang das zweite Blatt durch ein Werkzeug oder von Hand von dem ersten Blatt etwas abgehoben wird. Wenn dann die Verengung im Schlitz des ersten Blattes über den Grunddurchmesser der Nut hinweggerastet ist, nehmen die abgewinkelten Enden dieses Blattes ihre geschlossene Stellung wieder ein, in der sie dann in die Aussparung des zweiten Blattes hineinragen. Die beiden zusammenfedernden Blätter sorgen nämlich aufgrund der ihnen innewohnenden Federspannung dafür, daß die abgewinkelten Enden des ersten Blattes in der Aussparung des zweiten Blattes verbleiben, solange dieses zweite Blatt nicht von dem ersten Blatt abgespreizt wird. Da nun die Aussparung die abgewinkelten Enden des ersten Blattes seitlich begrenzt, können diese Abwinkelungen im Einbauzustand seitlich nicht auseinandergezogen werden, so daß ein Abziehen der Bolzensicherung in radialer Richtung nicht möglich ist, da in diesem Falle wegen der Verengung im Schlitz des ersten Blattes die abgewinkelten Enden des ersten Blattes gespreizt werden müssen. Diese Spreizung wird, wie gesagt, durch die Aussparung verhindert.

Um das Abheben des zweiten Blattes vom ersten Blatt zwecks Einsetzen der Bolzensicherung zu erleichtern, versieht man das zweite Blatt zweckmäßig an seiner der Krümmung des U abgewandten Seite mit einer von dem ersten Blatt wegweisenden Schräge, die zum Anfassen dient.

Wenn nach Einsetzen der Bolzensicherung ein Abspreizen des zweiten Blattes vom ersten Blatt verhindert werden soll, so sieht man an den beiden Enden des ersten Blattes außen je einen Vorsprung vor, der sich im Einbauzustand hinter das zweite Blatt setzt. Um eine derart gestaltete Bolzensicherung wieder abzuziehen, ist es nötig, die beiden Enden des ersten Blattes zusammenzudrücken, damit die Vorsprünge aus der Aussparung im zweiten Blatt herausgeführt werden können. Dies ist in jedem Falle eine relativ komplizierte Manipulation, so daß eine derart gestaltete Bolzensicherung einen besonders sicheren Sitz aufweist.

Bei einer derart gestalteten Bolzensicherung kann man das Einsetzen noch dadurch erleichtern, daß die Vorsprünge so abgeschrägt werden, daß beim Einschnappen des zweiten Blattes die beiden Enden des ersten Blattes zusammengedrückt werden. Die Schräge erzeugt dabei eine Kraftkomponente, die die Enden des ersten Blattes zusammendrückt, wodurch das Einschnappen des zweiten Blattes erleichtert wird.

In den Figuren ist ein Ausführungsbeispiel der Erfindung dargestellt. Es zeigt

Fig. 1 die Bolzensicherung in Draufsicht,

Fig. 2 die gleiche Bolzensicherung in Seitenansicht mit einem angedeuteten Bolzen,

Fig. 3 einen Schnitt durch eine Bolzensicherung mit Vorsprüngen an den Enden des ersten Blattes, wobei der Schnitt unter Zugrundelegung einer Bolzensicherung gemäß Fig. 1 längs der Linie III-III verlaufen würde.

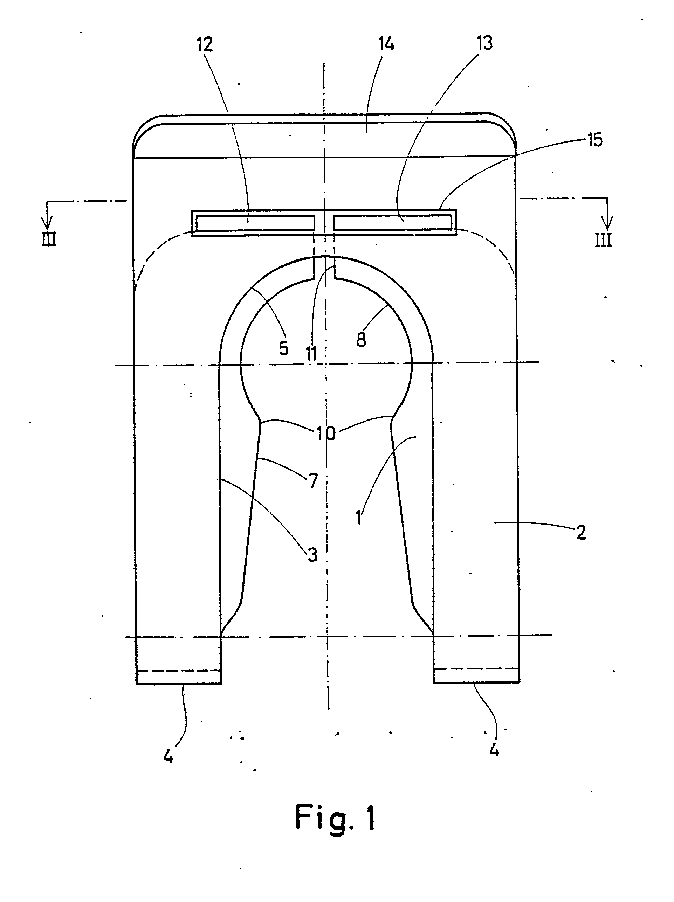

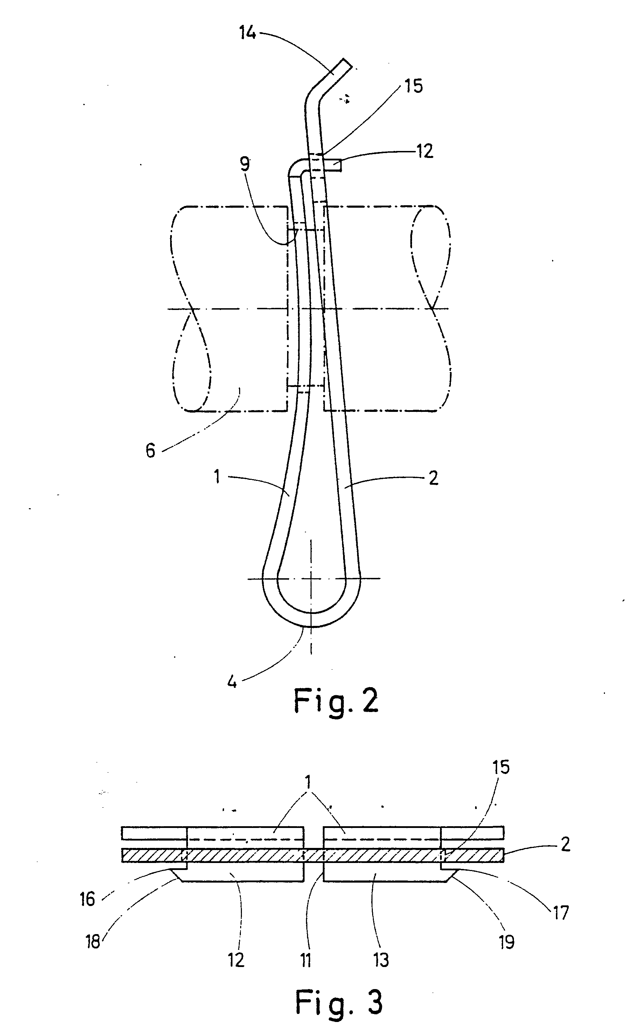

Die in der Fig. 1 dargestellte Bolzensicherung besteht aus dem ersten Blatt 1 und dem zweiten Blatt 2. Von dem ersten Blatt 1 ist nur derjenige Teil zu sehen, der von dem Schlitz 3 im zweiten Blatt 2 freigelassen ist. Die beiden Blätter 1 und 2 sind miteinander durch die Krümmung 4 verbunden, wobei die Blätter 1 und 2 im wesentlichen U-förmig zusammengebogen sind. In das Innere des Blattes 2 ist, wie gesagt, der Schlitz 3 eingebracht, der an seiner der Krümmung 4 abgewandten Seite in der Rundung 5 endet. Diese Rundung 5 ist dem Außendurchmesser des in der Fig. 2 mit 6 bezeichneten Bolzens (strichpunktiert dargestellt) angepaßt, d. h., der Außendurchmesser des Bolzens 6 paßt mit geringem Spiel in die Rundung 5. Das Blatt 1 ist ebenfalls mit einem Schlitz 7 versehen, der sich von der Krümmung 4 in das Blatt 1 erstreckt und in der Rundung 8 endet, die dem Grunddurchmesser der in der Fig. 2 mit 9 bezeichneten Nut angepaßt ist, d. h. im Einbauzustand legt sich der Grunddurchmesser der Nut 9 an die Wandung der Rundung 8 an. Es kann hier ein Spiel vorgesehen sein, es ist jedoch auch möglich, daß die Rundung 8 sich satt um den Grunddurchmesser der Nut 9 schließt. Im Schlitz 7 des Blattes 1 ist die Verengung 10 vorgesehen, durch die beim Einsetzen des Blattes 1 in die Nut 9 das Blatt 1 auseinandergespreizt wird. Dies wird dadurch ermöglicht, daß das Blatt 1 auf seiner der Rundung 4 abgewandten Seite mit dem Spalt 11 versehen ist, der das Blatt 1 von seinem Ende bis zu der Rundung 8 vollständig auftrennt, so daß beim Einsetzen des Blattes 1 in die Nut 9 infolge Aufspreizung des Blattes 1 der Spalt 11 federnd erweitert wird, bis schließlich die Nut 9 hinter die Verengung 10 gleitet, womit das Blatt 1 wieder zusammenfedern kann. Für diese federnde Aufspreizung liegt die Federzone im wesentlichen im Bereich der Rundung 4. Damit nun die Enden 12 und 13 des Blattes 1 bei diesem Auseinanderspreizen nicht durch das Blatt 2 behindert werden, wird das Blatt 2 während des Einsetzvorganges von Hand vom Blatt 1 weggespreizt. Das Blatt 2 wird hierzu über seine Schräge 14 z. B. mit einem Finger oder auch mit einem Werkzeug von dem Blatt 1 weggedrückt. Es hat allerdings unter der Wirkung der der Bolzensicherung innewohnenden Federspannung die Tendenz, zu dem Blatt 1 zurückzufedern. Bei diesem Einsetzvorgang gleitet der Außendurchmesser des Bolzens 6 in den Schlitz 3, bis schließlich der Außendurchmesser des Bolzens 6 die Rundung 5 erreicht hat. In dieser Lage hat auch die Rundung 8 den Grunddurchmesser der Nut 9 erreicht. Wenn jetzt das Blatt 2 freigegeben wird, also in Richtung auf das Blatt 1 zurückfedern kann, setzen sich die abgewinkelten Enden 12, 13 des Blattes 1 in die Aussparung 15 im Blatt 2, die die Enden 12 und 13 seitlich begrenzt. In der in den Fig. 1 und 2 dargestellten eingesetzten Lage können dann die Enden 12 und 13 nicht mehr auseinandergespreizt werden. Eine entsprechende Spreizkraft würde auf die Enden 12 und 13 ausgeübt werden, wenn versucht wird, die Sicherungsklemme axial wieder von dem Bolzen 6 abzuziehen. In diesem Falle würde nämlich der Grunddurchmesser der Nut 9 in zur Einsetzrichtung rückwärtiger Richtung gegen die Verengung 10 auflaufen und dabei die erwähnte Spreizkraft erzeugen. Wegen der Begrenzung der Bewegung der Enden 12 und 13 im Einbauzustand kann also die Bolzensicherung nicht wieder von dem Bolzen 6 abgezogen werden, es sei denn, es wird vorher das Blatt 2 von dem Blatt 1 weggedrückt, wobei dann die Enden 12 und 13 freigegeben werden.

Wenn verhindert werden soll, daß im Einbauzustand das Blatt 2 ohne weiteres vom Blatt 1 weggespreizt wird, sieht man an den Enden 12 und 13 die in der Fig. 3 dargestellten Vorsprünge 16 und 17 vor. In der Fig. 3 ist die gleiche Bolzensicherung wie in der Fig. 1 dargestellt, jedoch mit der Abwandlung der erwähnten Vorsprünge 16 und 17. Dabei würde sich die Darstellung gemäß Fig. 3 ergeben, wenn in der Bolzensicherung gemäß Fig. 1 ein Schnitt gemäß der Linie III-III angebracht werden und die Bolzensicherung gemäß Fig. 1 zusätzlich mit den Vorsprüngen 16 und 17 versehen werden würde. Aus der Fig. 3 ergibt sich deutlich, daß ein Wegfedern des Blattes 2 vom Blatt 1 durch die Vorsprünge 16 und 17 verhindert ist. Wenn die Bolzensicherung gemäß Fig. 3 wieder abgezogen werden soll, müssen zunächst durch ein Werkzeug die abgewinkelten Enden 12 und 13 des Blattes 1 zusammengedrückt werden, damit die Vorsprünge 16 und 17 durch die Aussparung 15 hindurchgeführt werden können. Der äußere Rand der Aussparung 15 ist in der Fig. 3 mit gestrichelten Linien angedeutet. Für diese Ausführungsform ist es erforderlich, daß die Rundung 8 auf dem Grunddurchmesser der Nut 9 (siehe Fig. 1 und 2) mit ausreichendem Spiel sitzt.

Die in der Fig. 3 dargestellten Vorsprünge 16 und 17 sind mit Abschrägungen 18 und 19 versehen, die nach dem Einsetzen der Bolzensicherung es erleichtern, die Aussparung 15 über die Vorsprünge 16 und 17 zu schieben. Unter der Wirkung der Schrägen 18 und 19 werden nämlich die Enden 12 und 13 zusammengedrückt, wenn die Schrägen 18 und 19 auf die äußeren Ränder der Aussparung 15 auftreffen, bis schließlich die Vorsprünge 16 und 17 sich federnd nach außen spreizen, wenn sie durch das Blatt 2 ganz hindurchgetreten sind. Sie nehmen dann die in der Fig. 3 dargestellte Lage ein.

Die vorstehend beschriebene Bolzensicherung wird vorzugsweise aus Federbandstahl hergestellt.

## Patentansprüche

1. Bolzensicherung mit Selbstsperrung gegen Radialabzug, die aus zwei U-förmig zusammengebogenen, beim Einbau voneinander federnd absspreizbaren Blättern (1, 2) besteht, deren erstes im Einbauzustand in eine Umfangsnut (9) des Bolzens (6) radial einschiebbar ist und deren zweites als selbsttätig einschnappende Sperre wirkt, wobei das erste Blatt (1) mit einem sich bis in die Krümmung des U erstreckenden Schlitz (7) versehen ist, der in einer dem Grunddurchmesser der Nut (9) angepaßten Rundung (8) endet, dadurch gekennzeichnet, daß in Richtung zur Krümmung (4) des U die Rundung (8) in eine Verengung (10) des Schlitzes (7) übergeht und auf der entgegengesetzten Seite in einen das erste Blatt (1) auftrennenden Spalt (11) ausläuft, wobei die beiden neben dem Spalt (11) stehenden Enden (12, 13) dieses Blattes (1) in Richtung auf das zweite Blatt (2) abgewinkelt sind und in eine Aussparung (15) dieses Blattes (2) ragen, die die Enden (12, 13) im Einbauzustand seitlich begrenzt, und daß das zweite Blatt (2) ebenfalls mit einem sich bis in die Krümmung (4) des U erstreckenden Schlitz (3) versehen ist, der in einer dem Außendurchmesser des Bolzens (6) angepaßten Rundung (5) endet.

2. Bolzensicherung nach Anspruch 1, dadurch gekennzeichnet, daß das zweite Blatt (2) an seiner der Krümmung (4) des U abgewandten Seite in einer von dem ersten Blatt (1) wegweisenden Schräge (14) zum Anfassen ausläuft.

3. Bolzensicherung nach Anspruch 1 oder 2, dadurch gekennzeichnet, daß die beiden Enden (12, 13) des ersten Blattes (1) außen je einen Vorsprung (16, 17) aufweisen, der sich im Einbauzustand hinter das zweite Blatt (2) setzt.

4. Bolzensicherung nach Anspruch 3, dadurch gekennzeichnet, daß die Vorsprünge (16, 17) so abgeschrägt sind, daß beim Einschnappen des zweiten Blattes (2) die beiden Enden (12, 13) des ersten Blattes (1) zusammengedrückt werden.

## Claims

1. A bolt fastener which is self-locking against radial withdrawal and consists of two blades (1, 2) together forming a U-shaped bow and spring-loaded away from one another when installed, the first blade in the installed condition being slidable radially into a circumferential groove (9) of the bolt (6) and the second acting as an automatic snap-catch, the first blade (1) being provided with a slot (7) extending into the bend of the U-shaped bow and terminating in a curvature (8) conforming to the diameter of the bottom of the groove (9), characterised thereby that, in the direction towards the bend (4) of the U-shaped bow, the curvature (8) merges into a constriction (10) of the slot (7) and in the opposite direction runs into a gap (11) dividing the first blade (1), the two ends (12, 13) of this blade (1) on either side of the gap (11) being angled towards the second blade (2) and projecting into an aperture (15) thereof which laterally confines the ends (12, 13) in the installed condition, and the second blade (2) is provided with a slot (3) extending into the bend (4) of the U-shaped bow and terminating in a curvature (5) conforming to the external diameter of the bolt (6).

2. A bolt fastener according to Claim 1, characterised thereby that the side of the second blade (2) remote from the bend (4) of the U-shaped bow has a sloping end (14), pointing away from the first blade (1), for grasping.

3. A bolt fastener according to Claim 1 or 2, characterised thereby that the two ends (12, 13) of the first blade (1) each have a projection (16, 17) which, in the installed condition, engages behind the second blade (2).

4. A bolt fastener according to Claim 3, characterised thereby that the projections (16, 17) are bevelled off so that the two ends (12, 13) of the first blade (1) are pressed together when the second blade (2) snaps into engagement.

## Revendications

1. Dispositif de retenue de tige à auto-verrouillage contre l'extraction radiale qui comprend deux lames (1, 2) recourbées ensemble en U, qu'on peut écarter élastiquement l'une de l'autre au moment du montage, dont la première peut être engagée radialement dans une gorge périphérique (9) de la tige (6) en position assemblée et dont la deuxième agit comme un verrou qui s'enclenche automatiquement, la première lame (1) comportant une encoche (7) qui se prolonge jusque dans la courbure du U et qui se termine par un arrondi (8) adapté au diamètre du fond de la gorge (9), caractérisé en ce que en direction de la coubure (4) du U, l'arrondi (8) se transforme en un rétrécissement (10) de l'encoche (7) et que du côté opposé, cet arrondi se termine par une fente (11) qui divise la première lame (1), les deux extrémités (12, 13) de cette lame (1) qui sont situées à côté de la fente (11) étant rabattues vers la deuxième lame (2) et s'engageant dans une lumière (15) de cette lame (2) qui retient latéralement les extrémités (12, 13) en position assemblée et en ce que la deuxième lame (2) comporte également une encoche (3) qui se prolonge jusque dans la courbure (4) du U et qui se termine par un arrondi (5) adapté au diamètre extérieur de la tige (6).

2. Dispositif suivant la revendication 1, caractérisé en ce que la deuxième lame (2) se termine, sur son côté qui est le plus éloigné de la courbure (4) du U, par un bord oblique (14) qui s'éloigne de la première lame (1), dans un but de préhension.

3. Dispositif suivant la revendication 1 ou 2, caractérisé en ce que les deux extrémités (12, 13) de la première lame (1) présentent extérieurement chacune une saillie (16, 17) qui se trouve derrière la deuxième lame (2) en position assemblée.

4. Dispositif suivant la revendication 3, caractérisé en ce que les saillies (16, 17) sont chanfreinées de telle manière que lors de l'enclenchement de la deuxième lame (2), les deux extrémités (12, 13) de la première lame (1) se rapprochent l'une de l'autre.

# Fig. 1

Fig. 2

Fig. 3